# FASCICULE DE BREVET EUROPEEN

(11) **EP 1 884 673 B1**
(45) Date de publication et mention de la délivrance du brevet: **11.04.2012**
(21) Numéro de dépôt: 07301072.0
(22) Date de dépôt: 30.05.2007
(51) Int. Cl.: F16D 3/64, F16D 65/12

(54) **Système de couplage et système de freinage**
Kupplungssystem und Bremssystem
Coupling system and braking system

(30) Priorité: 04.08.2006 FR 0607182
(43) Date de publication de la demande: 06.02.2008
(73) Titulaire: BWI Company Limited S.A., 1628 Luxembourg (LU)
(72) Inventeur: Jacques, Albert, 77560, BEAUCHERY SAINT MARTIN (FR)
(74) Mandataire: Laget, Jean-Loup

(56) Documents cités:
- EP-A2- 1 004 787
- WO-A-98/02286
- WO-A-2004/091938

## Description

La présente invention se rapporte à un système de freinage, et à un système de couplage de pièces en rotation convenant pour le système de freinage.

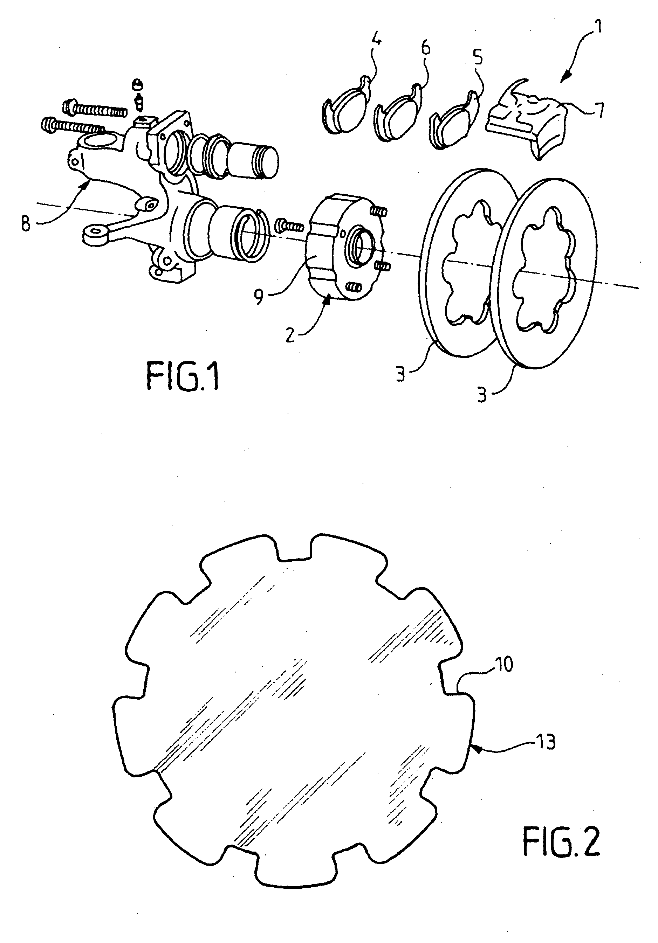

On connaît des systèmes de freinage dits systèmes à doubles disques. La figure 1 représente une vue en perspective éclatée d'un mode de réalisation d'un système de freinage 1 à double disque, selon l'art antérieur. Le système de freinage 1 comprend un moyeu 2 qui porte deux disques de freinage 3. Les disques de freinage 3 sont aptes à se déplacer axialement par rapport au moyeu 2. Le système de freinage 1 comprend également des plaquettes de frein 4, 5 et 6, un étrier 7 et un support de roue 8.

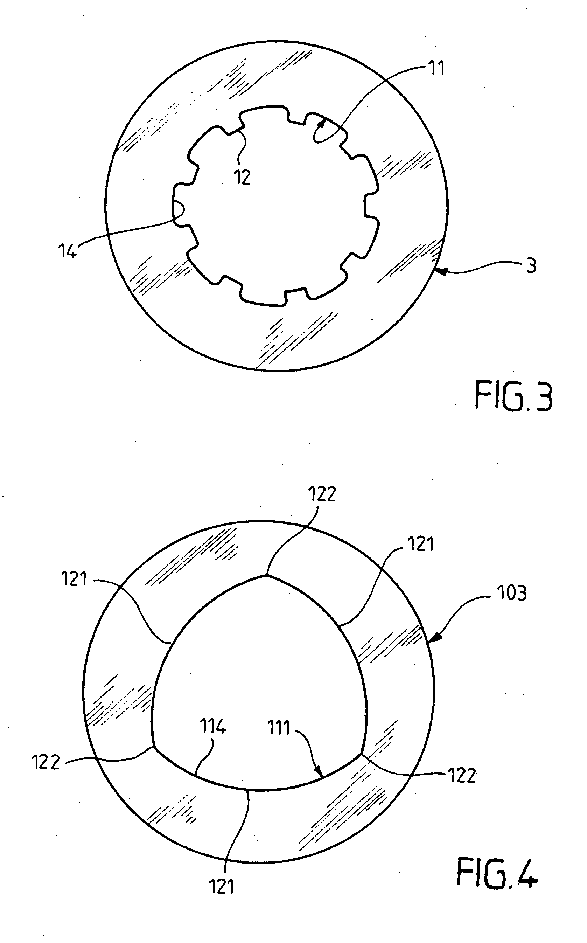

Le moyeu 2 présente une surface extérieure 9 cylindrique, qui présente un profil de moyeu 13 représenté sur la figure 2. Le profil de moyeu 13 correspond à un cercle pourvu d'une pluralité d'encoches 10 réparties sur le périmètre du cercle. Les disques 3 présentent chacun une surface intérieure 11 cylindrique, qui présente un profil de disque 14 représenté sur la figure 3.

Le profil de disque 14 est de forme correspondante au profil de moyeu 13, c'est-à-dire qu'il correspond à un cercle pourvu d'une pluralité de saillies 12 internes, aptes à coopérer avec les encoches 10 de sorte que le moyeu 2 et les disques 3 tournent conjointement autour de leur axe de rotation, tout en permettant un déplacement axial des disques 3 par rapport au moyeu 2.

Le système de freinage 1 présente plusieurs inconvénients. Les disques 3 sont en contact avec le moyeu 2 au niveau d'une pluralité de zones, correspondant aux encoches 10 et saillies 12. La translation axiale des disques 3 par rapport au moyeu 2 implique donc un frottement important. De plus, en raison notamment des tolérances de fabrication, un contact franc n'est pas nécessairement établi à chaque zone de contact théorique entre les disques 3 et le moyeu 2. Il en résulte notamment un bruit en cours de fonctionnement. En cas de freinage, le couple de freinage est brusquement transmis des disques 3 au moyeu 2, ce qui peut provoquer une usure mécanique. En cas de dilatation thermique, si le moyeu 2 et les disques 3 ne se dilatent pas dans des proportions identiques, le contact entre le moyeu 2 et les disques 3 peut impliquer un serrage trop important ou trop faible.

Le document WO98/02286 A1 montre un système de couplage d'après le préambule de la revendication 1.

L'invention a pour but de fournir un système de freinage qui ne présente pas au moins certains des inconvénients précités de l'art antérieur, et un système de couplage de pièces en rotation convenant pour le système de freinage.

Pour cela, l'invention fournit un système de couplage de pièces en rotation comprenant un moyeu apte à tourner autour d'un axe de rotation, au moins un organe annulaire porté par ledit moyeu et apte à se déplacer axialement par rapport audit moyeu, ledit moyeu présentant une surface extérieure cylindrique de courbe directrice définissant un profil de moyeu, ledit organe annulaire présentant une surface intérieure cylindrique de courbe directrice définissant un profil d'organe annulaire de forme correspondante à celle dudit profil de moyeu de sorte que ladite surface intérieure et ladite surface extérieure sont aptes à coopérer pour entraîner une rotation conjointe dudit moyeu et dudit organe annulaire, caractérisé par le fait que ledit profil de moyeu présente au moins trois sommets séparant au moins trois lobes de moyeu dont la concavité est tournée vers ledit axe de rotation, au moins trois goupilles élastiques étant agencées auxdits sommets au moins partiellement en saillie par rapport audit profil de moyeu, en contact avec ladite surface intérieure.

Comme les goupilles réalisent la liaison entre le moyeu et l'organe annulaire, qui forme un disque de freinage dans le cas d'un système de freinage, cette liaison peut s'adapter à la dilatation thermique et aux tolérances de fabrication grâce à l'élasticité des goupilles. De plus, le contact entre l'organe annulaire et les goupilles est réalisé au niveau de lignes de contact qui ne provoque qu'un faible frottement. La translation axiale de l'organe annulaire n'est donc que faiblement gênée. En cas de transmission d'un couple entre l'organe annulaire et le moyeu, les goupilles élastiques se déforment progressivement pour autoriser une faible rotation relative de l'organe annulaire et du moyeu, jusqu'à ce que la surface intérieure entre en contact avec la surface extérieure au niveau d'une zone de contact créée par une déformation élastique de l'organe annulaire et/ou du moyeu. L'aire de cette zone de contact augmente progressivement de sorte qu'on évite des brusques variations de contraintes dans l'organe annulaire et le moyeu.

De préférence, ledit profil de moyeu comprend trois sommets et trois lobes.

Ainsi, en l'absence de couple appliqué, il y a exactement trois zones de contact entre les trois goupilles et la surface intérieure. On respecte donc la règle dite des trois points en isostatisme, ce qui contribue à réduire le bruit généré par le système.

Avantageusement, dans une position relative dudit organe annulaire et dudit moyeu, ledit profil d'organe annulaire est une image homothétique dudit profil de moyeu.

Dans ce cas, les usinages de la surface intérieure et de la surface extérieure peuvent être réalisés par la même machine-outil commandée par le même programme, ce qui permet de réduire les écarts entre profils théoriques et profils réels dus aux tolérances de fabrications.

Selon un mode de réalisation particulier, lesdits lobes sont des arcs de cercle ou des portions d'ellipse.

Ces formes conviennent particulièrement pour réaliser, en cas de couple appliqué, une augmentation progressive de l'aire de la zone de contact entre les surfaces intérieure et extérieure, et éviter ainsi une brusque augmentation de contraintes.

Avantageusement, lesdites goupilles élastiques comprennent une paroi métallique cylindrique de révolution, qui présente une fente.

De préférence, ladite surface extérieure présente des évidements ménagés au niveau desdits sommets, lesdites goupilles élastiques étant agencées dans lesdits évidements.

L'assemblage du système est donc particulièrement simple car il suffit de positionner les goupilles dans les évidements puis de positionner l'organe annulaire autour du moyeu.

Selon un mode de réalisation particulier, lesdits évidements présentent des parois d'extrémités qui retiennent lesdites goupilles élastiques dans lesdits évidements.

Il n'est donc pas nécessaire de prévoir d'autres moyens pour retenir les goupilles dans les évidements.

Selon un mode de réalisation particulier, ladite surface extérieure présente des évidements secondaires ménagés au niveau desdits lobes, ledit système de couplage comprenant des goupilles élastiques secondaires agencées dans lesdits évidements secondaires.

L'invention fournit également un système de freinage pour roue de véhicule automobile, comprenant un système de couplage selon l'invention ci-dessus, ledit organe annulaire constituant un disque de freinage porté par ledit moyeu et apte à se déplacer axialement par rapport audit moyeu, ledit système de freinage comprenant au moins deux plaquettes de frein aptes à exercer une pression sur ledit disque de freinage.

De préférence, le système de freinage comprend au moins deux disques de freinage présentant chacun une surface intérieure cylindrique de courbe directrice correspondant audit profil d'organe annulaire, et trois plaquettes de frein.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue en perspective éclatée d'un système de freinage selon un mode de réalisation de l'art antérieur,
- la figure 2 représente le profil de moyeu du moyeu du système de la figure 1,
- la figure 3 est une vue de face d'un disque de freinage du système de la figure 1,
- la figure 4 est une vue de face d'un disque de freinage du système de freinage de la figure 11,
- la figure 5 est une vue de face du moyeu du système de freinage de la figure 11,
- la figure 6 est une vue de profil du moyeu de la figure 5,
- la figure 7 est une vue en perspective d'une variante du moyeu de la figure 5,
- la figure 8 est une vue de face du moyeu de la figure 5 et du disque de freinage de la figure 4, dans un état neutre,
- la figure 9 est une vue similaire à la figure 8, dans un état de freinage en marche avant,
- la figure 10 est une vue partielle en coupe du disque de freinage de la figure 4,
- la figure 11 est une vue schématique d'un système de freinage selon un mode de réalisation de l'invention, dans un état neutre, et
- la figure 12 est une vue schématique du système de freinage de la figure 11, dans un état de freinage.

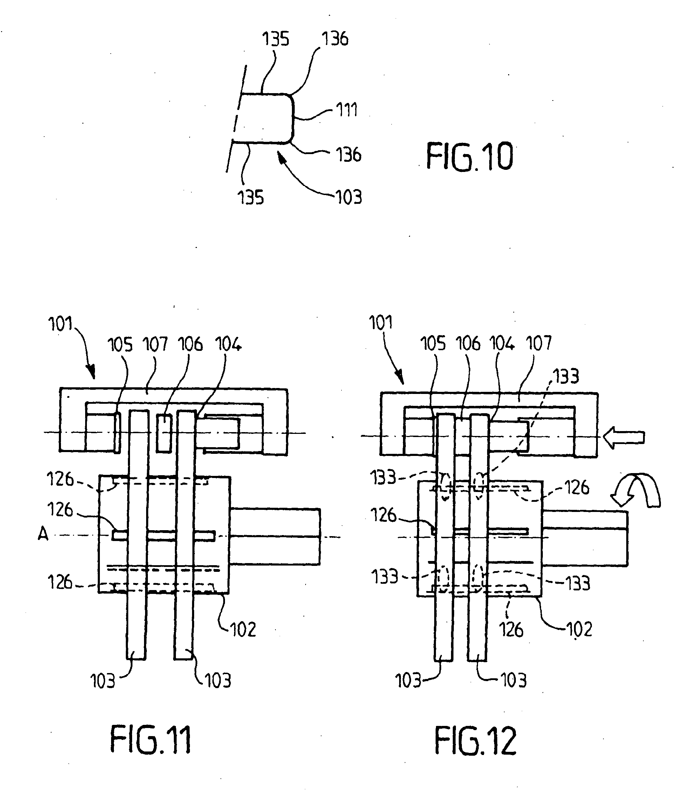

Les figures 11 et 12 représentent un système de freinage 101 pour roue de véhicule automobile, selon un mode de réalisation de l'invention. Sur ces figures, on a désigné des éléments identiques ou similaires aux éléments de la figure 1 par les mêmes numéros de référence, augmentés de 100. Ces éléments ne seront plus décrits en détail. Dans la suite de la présente description, on s'intéresse en particulier au moyeu 102 et aux disques de freinage 103, en références aux figures 4 à 10. Les deux disques de freinage 103 étant identiques, un seul sera décrit ci-dessous.

La figure 4 représente un disque de freinage 103, qui présente une surface intérieure 111 cylindrique de profil de disque 114. Le profil de disque 114 est constitué des trois lobes de disque 121 qui s'étendent entre trois sommets de disque 122 formant un triangle équilatéral. Les lobes de disque 121 sont des arcs de cercle. Le profil de disque 114 présente une symétrie d'axe d'ordre 3. La figure 10 montre que le disque de freinage 103 présente des portions arrondies 136 entre la surface intérieure 111 et les faces de disque 135.

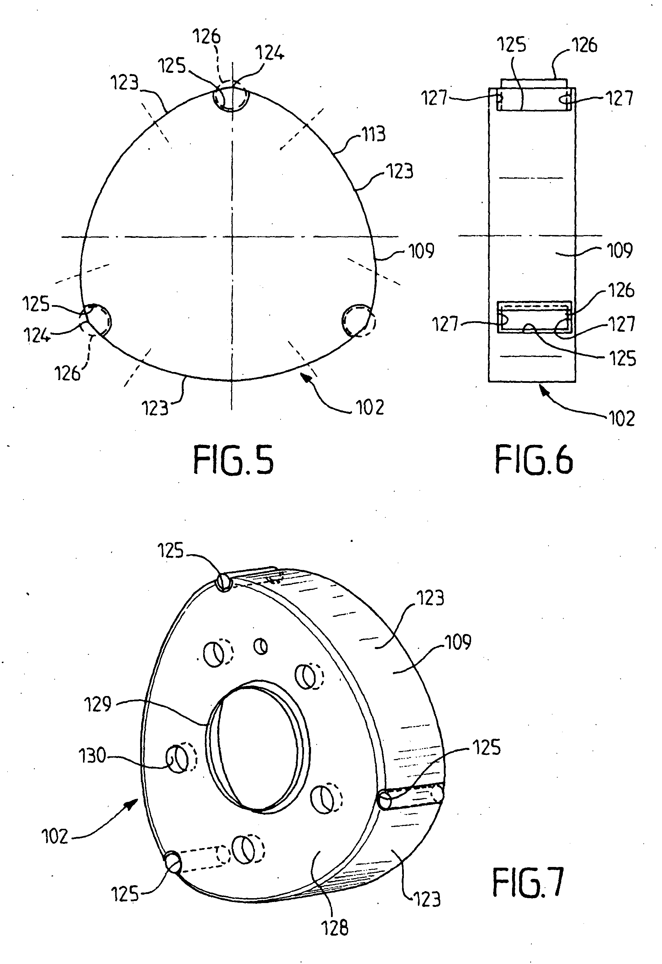

Les figures 5 et 6 représentent un moyeu 102 destiné à coopérer avec le disque de freinage 103. Le moyeu 102 présente une surface extérieure 109 cylindrique de profil de moyeu 113. Le profil de moyeu 113 est constitué des trois lobes de moyeu 123 qui s'étendent entre trois sommets de moyeu 124 formant un triangle équilatéral. Les lobes de moyeu 123 sont des arcs de cercle. Le profil de moyeu 113 présente une symétrie d'axe d'ordre 3.

A chaque sommet de moyeu 124, le moyeu 102 comprend un évidement 125 qui présente globalement la forme d'un cylindre de révolution partiel. Comme on peut le voir sur la figure 6, la longueur de l'évidement 125 est inférieure à l'épaisseur du moyeu 102 et l'évidement 125 présente des parois d'extrémités 127.

Une goupille élastique 126 est agencée dans chaque évidement 125. Les goupilles élastiques 126 sont par exemple des goupilles connues par l'appellation commerciale « goupille Mecanindus », c'est-à-dire que chaque goupille élastique 126 est constituée d'une paroi cylindrique de révolution en acier, présentant une fente longitudinale.

La figure 7 représente, en perspective, une variante du moyeu 102. Les mêmes numéros de références sont utilisés. La principale différence dans ce cas est que les lobes de moyeu 123 sont des portions d'ellipse. Sur la figure 7, on peut également voir que le moyeu 102 présente une paroi de fond 128 perpendiculaire à la surface extérieure 109. La paroi de fond 128 présente un orifice de centrage 129 et des orifices de fixation 130 pour le centrage et la fixation du moyeu 102.

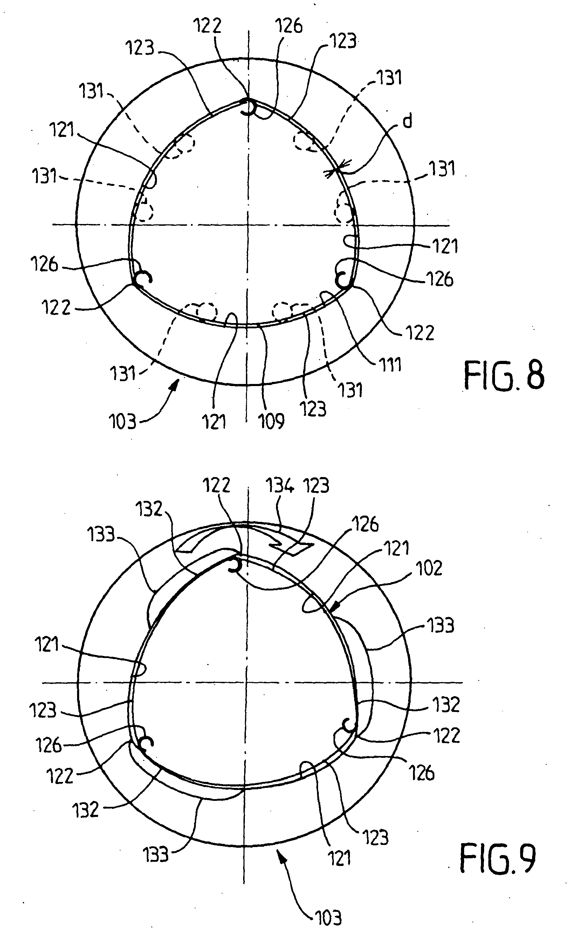

La figure 8 représente le moyeu 102 de la figure 5 et le disque de freinage 103 de la figure 4, quand aucun couple de freinage n'est appliqué. Sur cette figure, on peut voir que le profil de disque 114 est une image du profil de moyeu 113, par une homothétie dont le centre est sur l'axe de rotation A du moyeu et dont le rapport est légèrement supérieur à l'unité. Ainsi, il y a une distance d entre la surface intérieure 111 et la surface extérieure 109, qui est constante. Les goupilles élastiques 126 établissent la liaison entre le moyeu 102 et le disque de freinage 103, pour les entraîner dans une rotation conjointe. Cette liaison a lieu au niveau de trois lignes de contact, ce qui permet une translation axiale du disque de freinage 103 sans frottement important. De plus, l'élasticité des goupilles élastiques 126 permet de compenser l'effet de la dilatation thermique et des tolérances de fabrication de sorte que la liaison entre le moyeu 102 et le disque de freinage 103 est toujours bien établie au niveau des trois sommets de moyeu 124.

La figure 9 représente le moyeu 102 de la figure 5 et le disque de freinage 103 de la figure 4, quand un couple de freinage est appliqué, en marche avant. Le comportement en marche arrière est symétrique et n'est donc pas représenté. La flèche 134 représente le couple de freinage appliqué. Comme on peut le voir sur la figure 9, les goupilles élastiques 126 se déforment élastiquement pour autoriser une légère rotation relative du disque de freinage 103 et du moyeu 102. Le moyeu 102 entre alors en contact avec le disque de freinage 103, d'abord au niveau de trois points de contact puis, en raison d'une légère déformation élastique du disque de freinage 103 et/ou du moyeu 102, au niveau de trois zones de contact 132 dont l'aire croît progressivement. On assiste alors à une augmentation progressive des contraintes dans le disque de freinage 103, au niveau de zones de contraintes 133, et à une rotation conjointe du moyeu 102 et du disque de freinage 103.

L'homme du métier appréciera le fait que le système de freinage 101 comprend des éléments qui présentent une symétrie, ce qui contribue à faciliter l'assemblage du système. L'assemblage est aussi facilité par le fait que les goupilles élastiques 126 sont maintenues dans les évidements 125 sans qu'il soit nécessaire de prévoir des vis, rondelles, écrous ou autres moyens de fixation.

Dans un mode de réalisation alternatif, des goupilles élastiques secondaires sont agencés dans des évidements secondaires le long des lobes de moyeu 123, comme le représentent les cercles 131 sur la figure 8. Même dans ce cas, le nombre de pièces du système de freinage 101 est limité, ce qui facilite son assemblage.

Bien entendu, un moyeu qui présente le profil de moyeu décrit ci-dessus et un organe annulaire qui présente le profil de disque décrit ci-dessus peuvent former un système de couplage pour d'autres systèmes mécaniques qu'un système de freinage. Le système de couplage peut convenir pour tout système mécanique dans lequel deux pièces en rotation doivent pouvoir se déplacer axialement l'une part rapport à l'autre, par exemple un embrayage, un couplage entre un moteur rotatif et un axe long, un système télescopique,...

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention tel que définit par les revendications.

## Revendications

1. Système de couplage de pièces en rotation comprenant un moyeu (102) apte à tourner autour d'un axe de rotation (A), au moins un organe annulaire (103) porté par ledit moyeu (102) et apte à se déplacer axialement par rapport audit moyeu, ledit moyeu (102) présentant une surface extérieure (109) cylindrique de courbe directrice définissant un profil de moyeu (113), ledit organe annulaire (103) présentant une surface intérieure (111) cylindrique de courbe directrice définissant un profil d'organe annulaire (114) de forme correspondante à celle dudit profil de moyeu (113) de sorte que ladite surface intérieure (111) et ladite surface extérieure (109) sont aptes à coopérer pour entraîner une rotation conjointe dudit moyeu (102) et dudit organe annulaire (103), ledit profil de moyeu (113) présentant au moins trois sommets (124) séparant au moins trois lobes de moyeu (123) dont la concavité est tournée vers ledit axe de rotation (A), **caractérisé par** au moins trois goupilles élastiques (126) étant agencées auxdits sommets (124) au moins partiellement en saillie par rapport audit profil de moyeu (102), en contact avec ladite surface intérieure (111).

2. Système de couplage selon la revendication 1, **caractérisé par le fait que** ledit profil de moyeu (102) comprend trois sommets (124) et trois lobes (123).

3. Système de couplage selon l'une des revendications 1 à 2, **caractérisé par le fait que**, dans une position relative dudit organe annulaire (103) et dudit moyeu (102), ledit profil d'organe annulaire (103) est une image homothétique dudit profil de moyeu (102).

4. Système de couplage selon l'une des revendications 1 à 3, **caractérisé par le fait que** lesdits lobes (123) sont des arcs de cercle ou des portions d'ellipse.

5. Système de couplage selon l'une des revendications 1 à 4, **caractérisé par le fait que** lesdites goupilles élastiques (126) comprennent une paroi métallique cylindrique de révolution, qui présente une fente.

6. Système de couplage selon l'une des revendications 1 à 5, **caractérisé par le fait que** ladite surface extérieure (109) présente des évidements (125) ménagés au niveau desdits sommets (124), lesdites goupilles lastiques (126) étant agencées dans lesdits évidements.

7. Système de couplage selon la revendication 6, **caractérisé par le fait que** lesdits évidements (125) présentent des parois d'extrémités (127) qui retiennent lesdites goupilles élastiques (126) dans lesdits évidements (125).

8. Système de couplage selon l'une des revendications 1 à 7, **caractérisé par le fait que** ladite surface extérieure (109) présente des évidements secondaires ménagés au niveau desdits lobes (123), ledit système de couplage comprenant des goupilles élastiques secondaires (131) agencées dans lesdits évidements secondaires.

9. Système de freinage (101) pour roue de véhicule automobile, comprenant un système de couplage selon la revendication 1, ledit organe annulaire constituant un disque de freinage (103) porté par ledit moyeu (102) et apte à se déplacer axialement par rapport audit moyeu (102), ledit système de freinage comprenant au moins deux plaquettes de frein (104, 105, 106) aptes à exercer une pression sur ledit disque de freinage.

10. Système de freinage selon la revendication 9, **caractérisé par le fait qu'**il comprend au moins deux disques de freinage (103) présentant chacun une surface intérieure cylindrique de courbe directrice correspondant audit profil d'organe annulaire, et trois plaquettes de frein (104, 105, 106).

## Claims

1. A system for coupling rotating parts comprising a hub (102) capable of rotating about an axis of rotation (A), at least one annular member (103) borne by said hub (102) and capable of moving axially relatively to said hub, said hub (102) having an outer cylindrical surface (109) with a directrix curve defining a hub profile (113), said annular member (103) having an inner cylindrical surface (111) with a directrix curve defining an annular member profile (114) with a shape matching that of said hub profile (113), so that said inner surface (111) and said outer surface (109) are capable of cooperating in order to cause joint rotation of said hub (102) and of said annular member (103), said hub profile (113) having at least three apices (124) separating at least three hub lobes (123), the concavity of which is turned towards said axis of rotation (A), **characterized by** at least three elastic pins (126) being laid out at said apices (124) at least partly protruding relatively to said hub (102) profile, in contact with said inner surface (111).

2. The coupling system according to claim 1, **characterized by** the fact that said hub (102) profile comprises three apices (124) and three lobes (123).

3. The coupling system according to one of claims 1 to 2, **characterized by** the fact that, in a relative position of said annular member (103) and of said hub (102), said annular member (103) profile is a proportional image of said hub (102) profile.

4. The coupling system according to one of claims 1 to 3, **characterized by** the fact that said lobes (123) are circular arcs or elliptical portions.

5. The coupling system according to one of claims 1 to 4, **characterized by** the fact that said elastic pins (126) comprise an axisymmetrical cylindrical metal wall, which has a slot.

6. The coupling system according to one of claims 1 to 4, **characterized by** the fact that said outer surface (109) has recesses (125) made at said apices (124), said elastic pins (126) being laid out in said recesses.

7. The coupling system according to claim 6, **characterized by** the fact that said recesses (125) have end walls (127), which retain said elastic pins (126) in said recesses (125).

8. The coupling system according to one of claims 1 to 7, **characterized by** the fact that said outer surface (109) has secondary recesses made at said lobes (123), said coupling system, comprising secondary elastic pins (131) laid out in said secondary recesses.

9. A braking system (101) for an automobile vehicle wheel, comprising a coupling system according to claim 1, said annular member forming a brake disc (103) borne by said hub (102) and capable of axially moving relatively to said hub (102), said braking system, comprising at least two brake pads (104, 105, 106) are capable of exerting pressure on said brake disc.

10. The braking system according to claim 9, **characterized by** the fact that it comprises at least two brake discs (103), each having an inner cylindrical surface with a directrix curve corresponding to said annular member profile, and three brake pads (104, 105, 106).

## Patentansprüche

1. Kopplungssystem drehender Teile, das eine Nabe (102) umfasst, die imstande ist, um eine Drehachse (A) zu drehen, mindestens ein ringförmiges Organ (103), das von der Nabe (102) getragen wird und imstande ist, sich axial zu der Nabe zu verschieben, wobei die Nabe (102) eine zylindrische Leitkurven-Außenfläche (109) aufweist, die ein Nabenprofil (113) definiert, wobei das ringförmige Organ (103) eine zylindrische Leitkurven-Innenfläche (111) aufweist, die ein Ringorganprofil (114) mit einer Form, die der des Nabenprofils (113) entspricht, derart definiert, dass die Innenfläche (111) und die Außenfläche (109) zur Zusammenarbeit imstande sind, um eine gemeinsame Rotation der Nabe (102) und des ringförmigen Organs (103) hervorzurufen, wobei das Nabenprofil (113) mindestens drei Spitzen (124) aufweist, die mindestens drei Nabenbögen (123) abteilen, deren Konkavität zu der Drehachse (A) gedreht ist, durch mindestens drei elastische Stifte (126) **gekennzeichnet**, die an den Spitzen (124) zumindest teilweise im Verhältnis zum Profil der Nabe (102) im Kontakt mit der Innenfläche (111) hervorstehend ausgebildet sind.

2. Kopplungssystem nach Anspruch 1, **dadurch gekennzeichnet, dass** das Prodil der Nabe (102) drei Spitzen (124) und drei Bögen (123) umfasst.

3. Kopplungssystem nach einem der Ansprüche 1 bis 2, **dadurch gekennzeichnet, dass** das Profil des ringförmigen Organs (103) in einer relativen Stellung des ringförmigen Organs (103) und der Nabe (102) ein homothetisches Abbild des Profils der Nabe (102) ist.

4. Kopplungssystem nach einem der Ansprüche 1 bis 3, **dadurch gekennzeichnet, dass** die Bögen (123) Kreisbögen oder Ellipsenabschnitte sind.

5. Kopplungssystem nach einem der Ansprüche 1 bis 4, **dadurch gekennzeichnet, dass** die elastischen Stifte (126) eine zylindrische metallische Rotationswand umfassen, die einen Schlitz aufweist.

6. Kopplungssystem nach einem der Ansprüche 1 bis 5, **dadurch gekennzeichnet, dass** die Außenfläche (109) Aussparungen (125) aufweist, die auf Ebene der Spitzen (124) eingearbeitet sind, wobei die elastischen Stifte (126) in den Aussparungen ausgebildet sind.

7. Kopplungssystem nach Anspruch 6, **dadurch gekennzeichnet, dass** die Aussparungen (125) Abschlusswände (127) aufweisen, die die elastischen Stifte (126) in den Aussparungen (125) zurückhalten.

8. Kopplungssystem nach einem der Ansprüche 1 bis 7, **dadurch gekennzeichnet, dass** die Außenfläche (109) sekundäre, auf Ebene der Bögen (123) eingearbeitete Aussparungen aufweist, wobei das Kopplungssystem sekundäre elastischen Stifte (131) umfasst, die in den sekundären Aussparungen ausgebildet sind.

9. Bremssystem (101) für ein Kraftfahrzeugrad, das ein Kopplungssystem nach Anspruch 1 umfasst, wobei das ringförmige Organ eine von der Nabe (102) getragene Bremsscheibe (103) ist und imstand ist, sich axial zu der Nabe (102) zu verschieben, wobei das Bremssystem mindestens zwei Bremsbeläge (104, 105, 106) umfasst, die imstande sind, einen Druck auf die Bremsscheibe auszuüben.

10. Bremssystem nach Anspruch 9, **dadurch gekennzeichnet, dass** es mindestens zwei Bremsscheiben (103) umfasst, die jeweils eine zylindrische Leitkurven-Innenfläche aufweisen, die dem Ringorganprofil entspricht, und drei Bremsbeläge (104, 105, 106).
